# EUROPEAN PATENT SPECIFICATION

(11) **EP 4 382 919 B1**
(45) Date of publication and mention of the grant of the patent: **07.10.2026**
(21) Application number: 22852532.5
(22) Date of filing: 03.02.2022
(51) Int. Cl.: G01Q 70/14, G01Q 60/58, G01Q 70/10, G01K 11/00, G01K 11/20

(54) **DETECTION PROBE, PROBE MICROSCOPE, AND SAMPLE TEMPERATURE MEASURING METHOD**
DETEKTIONSSONDE, SONDENMIKROSKOP UND PROBENTEMPERATURMESSVERFAHREN
SONDE DE DÉTECTION, MICROSCOPE À SONDE ET PROCÉDÉ DE MESURE DE TEMPÉRATURE D'ÉCHANTILLON

(30) Priority: 04.08.2021 JP 2021128519
(43) Date of publication of application: 12.06.2024
(73) Proprietor: Hitachi, Ltd., Tokyo 100-8280 (JP)
(72) Inventor: KOGUCHI, Masanari, Tokyo 100-8280 (JP)
(74) Representative: Mewburn Ellis LLP
(86) International application number: PCT/JP2022/004333
(87) International publication number: WO 2023/013103

(56) References cited:
- WO-A1-2020/218504
- CN-A- 111 220 821
- JP-A- 2015 529 328
- JP-A- 2017 067 650
- US-A1- 2016 018 269
- TETIENNE JEAN-PHILIPPE, LOMBARD ALAIN, SIMPSON DAVID A., RITCHIE CAMERON, LU JIANING, MULVANEY PAUL, HOLLENBERG LLOYD C. L.: "Scanning Nanospin Ensemble Microscope for Nanoscale Magnetic and Thermal Imaging", NANO LETTERS, AMERICAN CHEMICAL SOCIETY, US, vol. 16, no. 1, 13 January 2016 (2016-01-13), US , pages 326 - 333, XP055860920, ISSN: 1530-6984, DOI: 10.1021/acs.nanolett.5b03877

## Description

### Technical Field

The present invention relates to a detection probe, a probe microscope, and a sample temperature measuring method.

### Background Art

With increasingly active research and development of regenerative medicine or new materials for electronics to which biological functions are applied, a challenge is to visualize material functions. Specifically, for cells, technologies are required for monitoring the processes of differentiation and induction and quantitatively measuring, for example, signal propagation in an artificial ion channel simulating biological functions.

Measurements for the processes and functions described here should be acquired as physical quantities such as electric field, magnetic field, temperature, and light emission involved in reaction. In these circumstances, technology is widely used, for example, for using, as a label, a fluorescent dye that is likely to be associated with a particular protein to track a reaction process or extracting particular subcellular organelles using a centrifugation technology or the like and tracking a reaction process by gene analysis. However, problems with such technology are a spatial resolution at a sub-micrometer level defined by the wavelength of light and high invasiveness leading to cellular destruction.

In these circumstances, in recent years, much attention has been paid to measurement for biological functions using a sensor of a diamond material including an NV center described below; the diamond material is sensitive to a fine electromagnetic field and temperature, the sensor has a size at an atomic level and thus has a high spatial resolution, and the material is a carbon material and thus has high biocompatibility.

Examples of the measurement technology using the NV center include (1) a method of using nano particles including an NV center and (2) scanning probe microscopy using a diamond probe including an NV center (for example, see PTL 1).

However, in the measurement using nano particles including an NV center in (1) described above, only the periphery of a location where the nano particles are present can be measured, and position controllability is not high. Another problem is that in a case where the nano particles are aggregated, the spatial resolution is correspondingly low.

### Citation List

### Patent Literature

PTL 1: JP-2015-529328-A (Japanese Patent No. 6117926)

JP2017067650A relates to a near-field probe structure and a scanning probe microscope.

WO2020218504A1 relates to an observation system and an observation method.

US2016018269A1 relates to a nanometer scale quantum thermometer.

CN111220821A relates to a diamond atomic force microscopy probe system and manufacturing method.

### Non-Patent Literature

Article by Tetienne Jean-Philippe et al, titled: "Scanning Nanospin Ensemble Microscope for Nanoscale Magnetic and Thermal Imaging", published in Nano Letters, American Chemical Society, US, vol. 16, no. 1, 13 January 2016 (2016-01-13), pages 326-333, XP055860920, US DOI: 10.1021/acs.nanolett.5b03877.

### Summary of the Invention

### Problems to be Solved by the Invention

For the scanning probe microscopy using a probe including an NV center in (2) described above, a high spatial resolution can be expected to be achieved, and no problem is posed for physical quantities such as magnetic field and electric field which can be measured with no contact with samples.

However, for temperature measurement, a sample need to be contacted using a probe, and the contact may vary the temperature of the sample. As a result, sensitive temperature measurement is difficult to achieve.

An object of the present invention is to achieve sensitive temperature measurement in a detection probe of a probe microscope including an NV center.

### Means for Solving the Problems

A detection probe according to claim 1 of the present invention is a detection probe of a probe microscope configured to measure a temperature of a sample, the detection probe including a probe including at least one nitrogen-vacancy center, and a support portion supporting the probe, in which the detection probe includes, between the nitrogen-vacancy center and the support portion, at least a cut-off portion configured to cut off the nitrogen-vacancy center from the support portion.

A probe microscope according to claim 7 of the present invention is a probe microscope configured to measure a temperature of a sample by scanning the sample using a detection probe, in which the detection probe includes a probe including at least one nitrogen-vacancy center, and a support portion supporting the probe, and includes, between the nitrogen-vacancy center and the support portion, at least a cut-off portion configured to cut off the nitrogen-vacancy center from the support portion.

A sample temperature measuring method according to claim 13 of the present invention is a sample temperature measuring method of measuring a temperature of a sample using a probe microscope scanning the sample using a detection probe, the method including: forming a detection probe using a probe including at least one nitrogen-vacancy center and a support portion supporting the probe; cutting off, from the support portion, a tip portion of the probe including the nitrogen-vacancy center; inserting the cut-off tip portion of the probe including the nitrogen-vacancy center, into the sample at a predetermined point to leave the tip portion in the sample; and measuring the temperature of the sample via the left nitrogen-vacancy center.

### Advantages of the Invention

According to an aspect of the present invention, the detection probe of the probe microscope including an NV center can achieve sensitive temperature measurement.

### Brief Description of the Drawings

FIG. 1A is a diagram depicting a crystal structure of a diamond including a NV center.
FIG. 1B is an electron energy state diagram of the diamond including the NV center.
FIG. 1C is an optically detected magnetic resonance spectrum of the diamond including the NV center.
FIG. 2 is a diagram depicting a basic configuration of a scanning probe microscope using, as a probe, the diamond including the NV center.
FIG. 3 is a diagram illustrating a method of producing a probe using the diamond including the NV center, and a heat dissipation problem occurring when a sample in a liquid is contacted using the probe.
FIG. 4 is a diagram illustrating a method of producing a probe using the diamond including the NV center, with the NV center of the probe at the tip being cut off by a mechanical force and left in a sample, and also illustrating a method of injecting the NV center into a cell sample at a desired point.
FIG. 5 is a diagram illustrating a method of producing a probe using the diamond including the NV center, with the NV center of the probe at the tip being cut off at a water-soluble film portion and left in a sample, and also illustrating a method of injecting the NV center into a cell sample at a desired point.
FIG. 6 is a diagram illustrating results of calculation of a temperature gradient caused by heat conduction and radiation in the diamond probe.
FIG. 7 is a diagram illustrating a production process for a probe for a probe microscope using a focused ion beam and a microsampling method.

### Modes for Carrying Out the Invention

Embodiments of the present invention will be described below in detail on the basis of the drawings. Note that in all the drawings describing the embodiments, the same members are in principle denoted by the same reference signs, and repeated descriptions are omitted.

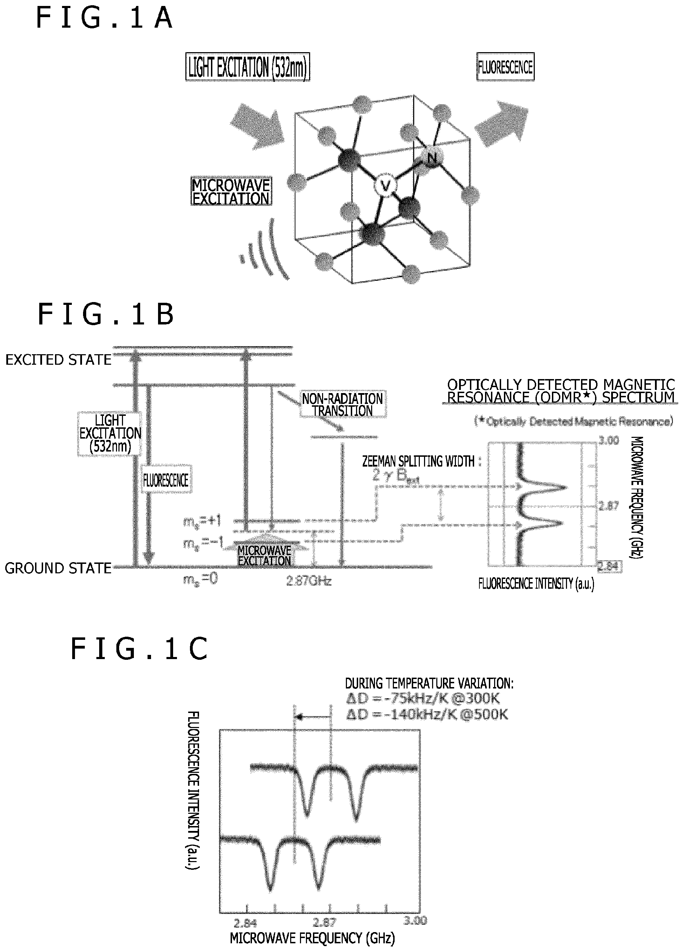

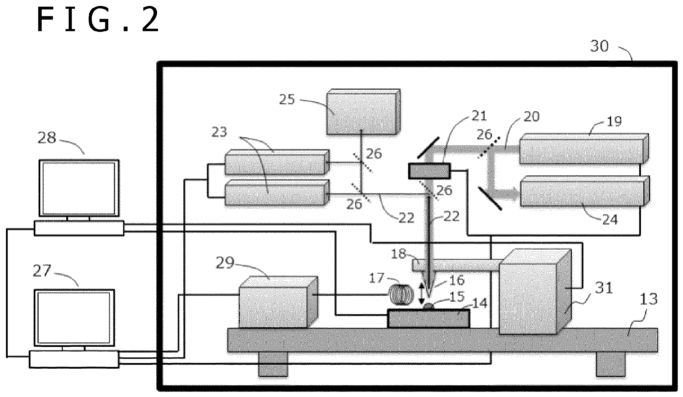

First, with reference to FIGS. 1A, 1B, 1C, and 2, a general technology corresponding to a prerequisite of the present invention will be described.

First, FIG. 1A depicts a unit cell structure of a diamond including an NV center.

Typically, a diamond substrate containing nitrogen (N) is irradiated with electron beams to introduce a certain amount of vacancy (V) in the diamond substrate. Subsequently, the substrate is annealed at high temperatures to rearrange nitrogen (N) and the vacancy (V) at adjacent positions in a <111> direction, leading to an energetically stable state. A light emission center formed in the diamond is referred to as an NV center due to the atomic structure thereof. Such a crystal assumes a characteristic electron energy state as depicted in FIG. 1B.

An NV pair typically captures one electron to become monovalent NV⁻, and electrons form a spin-triplet state. In a doing-nothing state, irradiation with green light with a wavelength of 532 nm causes electrons in a state of mₛ = 0 to be excited to emit red fluorescence with a larger wavelength (approximately 550 to 800 nm). The electrons are thus relaxed into the original state of mₛ = 0.

On the other hand, when the crystal is irradiated with microwaves of approximately 2.87 GHz, electron spin resonance allows the electrons to be excited from the state of mₛ = 0 to a state of mₛ = ±1. In the state of mₛ = ±1, irradiation with the green light with a wavelength of 532 nm described above causes some of the electrons to be relaxed into the state of mₛ = 0 via non-radiation transition. In this case, red fluorescence correspondingly decreases. The state of mₛ = ±1 is degenerate under a zero magnetic field. However, the presence of a magnetic field causes Zeeman splitting into two levels.

With this feature utilized, by sweeping the wavelength of the microwave exciting the electrons from the state of mₛ = 0 to the state of mₛ = ±1, electron spin resonance (ESR) occurs to enable resonance level to be accurately measured. That is, with a magnetic field applied to the NV center, a resonance spectrum in the right of FIG. 1C is obtained, allowing the applied magnetic field to be calculated from an energy difference (here, frequency difference) between two peaks. The spectrum is generally referred to as an optically detected magnetic resonance (ODMR) spectrum.

The ODMR spectrum is known to exhibit a further energy (frequency) shift in a case where the temperature varies at the NV center. As depicted in FIG. 1C, a shift amount of -75 kHz/K is obtained at a temperature of 300 K, and a shift amount of -140 kHz/K is obtained at a temperature of 500 K. Therefore, the shift amounts allow the temperature of the NV center to be measured, and accuracy in this case is assumed to be 10 mK or less.

A measurement technology to which the NV center is applied may have a spatial resolution at an atomic level because a sensing part of the technology has a size at an atomic level as depicted in Fig. 1A.

However, the detection uses light, and thus a luminous point extends over the wavelength of light, that is, approximately several hundreds of nm. Accordingly, two methods are available for increasing the spatial resolution in measuring the temperature using the NV center: (1) a method of using nano particles including an NV center and (2) a method of scanning probe microscopy using a diamond probe including an NV center. For (1), carbon nano particles including an NV center are already commercially available, and are included in a sample to be measured. The sample is then irradiated with green laser light of 532 nm and a microwave to detect red fluorescence depicted in FIGS. 1A and 1C. In a case where the positions of nano particles can be accurately recognized, a spatial resolution is obtained that corresponds to a nano particle size.

Now, an outline of an apparatus configuration will be provided with reference to FIG. 2. FIG. 2 is a diagram depicting a basic configuration of a scanning probe microscope using, as a probe, a diamond including an NV center.

Here, an apparatus configuration is depicted on the basis of a general scanning probe microscope 31 (SPM). That is, a material 15 is installed on a sample stage 14 on an optical bench 13 including an anti-vibration function, and a diamond probe 16 including an NV center is scanning the sample 15 from above.

An antenna 17 for a microwave to be applied to the sample 15 is installed near the sample 15. On the other hand, green laser light 20 from a green laser 19 with a wavelength of 532 nm, which excites electrons, is aligned and radiated to the diamond probe 16 through a transparent base material 18. Before reaching the diamond probe 16, the green laser light 20 passes through an AOM 21 (Acoustic-Optic Modulator). The AOM 21 uses a dielectric element to cause vibration to form a standing wave in the crystal, and the crystal is utilized as a diffraction grating. A vibration frequency applied into the crystal allows the grating width of the diffraction grating to be controlled, thus allowing a free variation in the angle of light bending through the diffraction grating.

The diamond probe 16 includes an NV center, and red fluorescence 22 radiated from the NV center passes through a light path of incident laser light in the opposite direction, and is detected by an APD detector 23 (Avalanche photodiode) via a dichroic mirror 26. The green laser light 20 is guided to a beam profiler 24 that adjusts the intensity and shape of the beam, and the red fluorescence is guided to a spectrometer 25 for determination of light emission characteristics.

A microwave power amplifier 29 and the APD detector 23 are connected to a control system apparatus 27, and the probe microscope 31 and the sample stage 14 are connected to an SPM controller 28. The control system apparatus 27 and the SPM controller 28 are connected to each other by communication to allow control of time sequences such as microwaves and sample stage control. These components are installed in a dark room 30 in order to avoid the entry of stray light into the detector.

An electromagnetic field measuring method is expected to allow for measurement with a high spatial resolution of approximately 10 nm. The diamond probe 16 including an NV center and the transparent base material are both formed of diamond. Additionally, as a method of producing a probe for a probe microscope using diamond as a material, ab FIB microsampling method is applied that is a processing technology to which focused ion beam having a fine structure is applied.

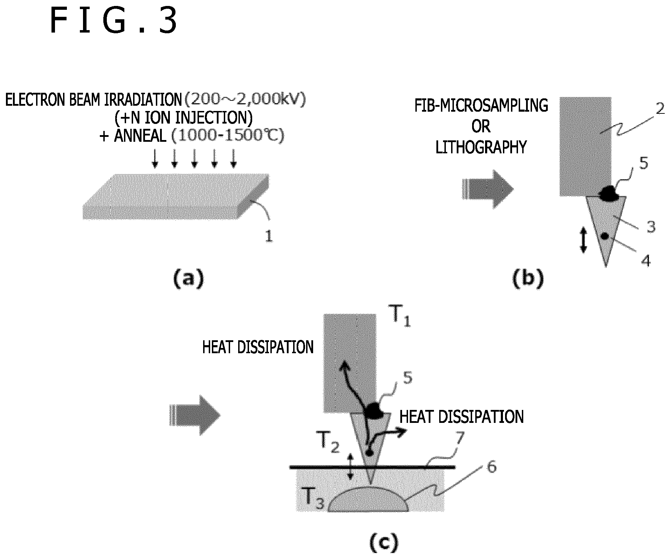

Now, with reference to FIG. 3, associated technologies of the present invention will be described.

First, a diamond substrate 1 including an NV center is prepared. Typically, the diamond substrate 1 contains nitrogen (N), but the amount of nitrogen may be increased by ion injection. Subsequently, the substrate is irradiated with electrons to form vacancy (V), and annealed to an NV pair (see FIG. 3(a)).

Then, a focused ion beam (FIB) and the microsampling technology or lithography are used to perform microfabrication to install a diamond probe 3 shaped like a probe, on the base material 2 via an adhesive 5. The diamond probe 3 includes an NV center 4 (FIG. 3(c)).

In a case where the thus produced probe is used for, for example, observation of a biological sample, the sample 6 is typically located in liquid below a liquid level 7. Additionally, in a case where temperature is measured, the diamond probe 3 needs to contact the sample 6 unlike in measurement of electric fields or magnetic fields.

Accordingly, when the temperature of the base material 2 is T1, the temperature of the NV center 4 is T2, and the temperature of the sample 6 is T3, the following problems may occur: heat is conducted to the base material 2 via the probe or heat is radiated from side surfaces of the probe, leading to a variation in the temperature of the sample 6, and the temperature varies between the sample 6 and the NV center position (T1 < T2 < T3).

That is, a problem is a failure to sufficiently take advantage of the temperature measuring capability of the NV center, which is said to originally enable accurate temperature measurement at an mK level.

Embodiments of the present invention sufficiently take advantage of the temperature measuring capability of the NV center. This suppresses heat conduction to outside via the probe while maintaining optionality and high spatial resolution of the set position of the NV center. For example, sensitive temperature measurement is achieved in cells and the like.

First, heat conduction and radiation of the probe are quantitatively studied and utilized for construction of the invention.

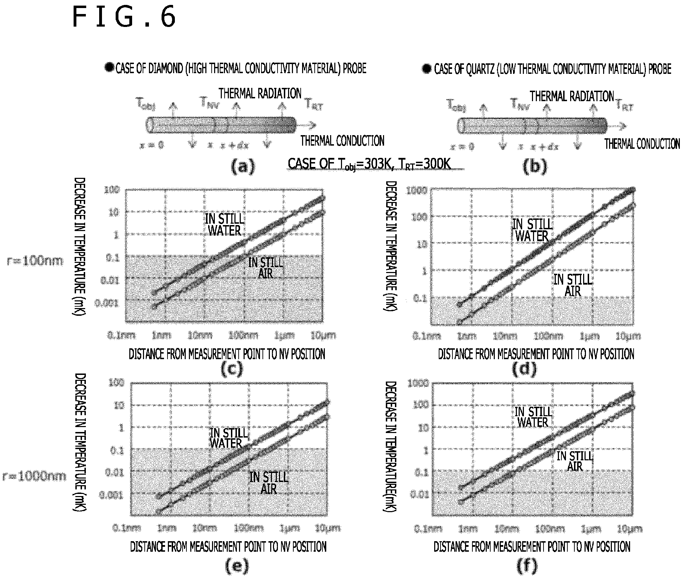

FIG. 6(a) depicts a probe-shaped model used for calculation. For simplification, a cylindrical probe with a radius r was studied. A sample to be measured was present at a position of x = 0, and the temperature of the sample is denoted by Tobj. An NV center was present at a position of x = x, and the temperature of the NV center is denoted by TNV. The temperature at x = ∞ is denoted by TRT. When the heat conductivity of the member is λ, the surface heat conductivity (heat transfer coefficient) is α, and the density is ρ, an equation (Formula 1) expresses heat transfer per unit time obtained by subtracting the heat radiation from the side surfaces from the heat transfer in the X axis direction.
[Formula 1] $\frac{dQ}{dt} = λS \frac{{\partial }^{2} T}{\partial {x}^{2}} dx - αS \left({T}_{NV}-{T}_{RT}\right)$ (1) where S = πr2 and S = 2πrdx. An equation (Formula 2) expresses a change in heat quantity per unit mass.
[Formula 2] $\frac{dq}{dt} = \frac{λ}{ρ} \frac{{\partial }^{2} T}{\partial {x}^{2}} - \frac{2 α}{r ρ} \left({T}_{NV}-{T}_{RT}\right)$ (2)

An equation (Formula 3) expresses a temperature change in a steady state.
[Formula 3] $\frac{{\partial }^{2} T}{\partial {x}^{2}} = \frac{2 α}{λr} \left({T}_{NV}-{T}_{RT}\right)$ (3)

Accordingly, when T_{NV} = T_{obj} at x = 0 and T_{NV} = T_{RT} at x = ∞, (Formula 4) representing the temperature of the NV center position is obtained.
[Formula 4] ${T}_{NV} = {T}_{RT} + \left({T}_{obj}-{T}_{RT}\right) exp \left(-\sqrt{\frac{2 α}{λr}}x\right)$ (4)

FIGS. 6(c) to 6(f) illustrate the results of calculation of temperature gradients of diamond and quartz glass using Formula (4); diamond has a high heat conductivity and is a probe material, and quartz glass is a base material candidate due to efficient transmission of light and has a low heat conductivity.

Additionally, Table 1 is a summary of the amounts of temperature drop between samples and NV centers in a case where the samples are diamond. Here, the probe was assumed to be still liquid or in the air with no flow (still air). Additionally, Tobj = 303K, and TRT = 300K.

For the heat conductivity λ, diamond was assumed to have a heat conductivity of 1000 W/(m*K), and quartz glass was assumed to have a heat conductivity of 1.4 W/(m*K). The heat transfer coefficient α was assumed to be 100 W(m2*K) in still liquid and 5 W/ (m2*K) in still air. The probe was assumed to have a radius r = 100 nm.

### [Table 1] Amount of Temperature Drop between Samples and NV centers (unit: mK)

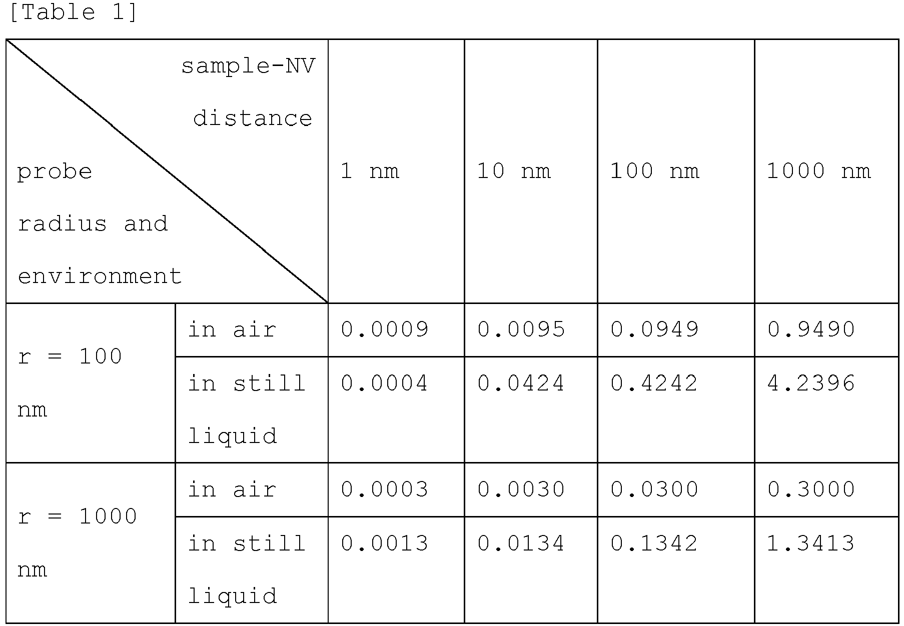

The following conclusions have been drawn from FIGS. 6(c) to 6(f) and Table 1.
(1) In a case where the probe radius is small and 1 µm or less, important factors for the temperature gradient include a larger surface area and a larger volume, and heat radiation from the surfaces is more important factor than heat conduction in the axial direction. Accordingly, means for suppressing heat conduction such as insertion of a low heat conductivity material in the axial direction is not effective in reducing the temperature gradient.
(2) Increasing the probe radius suppresses heat radiation from the surfaces, thus allowing the heat gradient to be reduced. That is, the probe radius is a key factor in defining the spatial resolution of a measurement system, and thus the spatial resolution and a temperature resolution have a trade-off relationship.
(3) In a case where the probe includes a plurality of NV centers, a variation in distance from the sample reduces temperature measurement accuracy. In a case where the radius is small and 100 nm, the distance from the sample to the NV center needs to be approximately 200 nm or less in order to set the temperature measurement accuracy to 1 mK or less in a still liquid such as in cells.

As described above, a new problem has been found that may occur in a case where a diamond probe with a radius of 1 µm or less is used as a probe microscope. In such a case, the temperature gradient problem may occur to make design of an apparatus performance difficult which is robust for a measurement target.

This has led to the conclusion that to perform accurate temperature measurement while taking advantage of the high resolution of the probe microscope, an effective method is to cut off diamond including an NV center from the probe tip and leave the diamond in the sample.

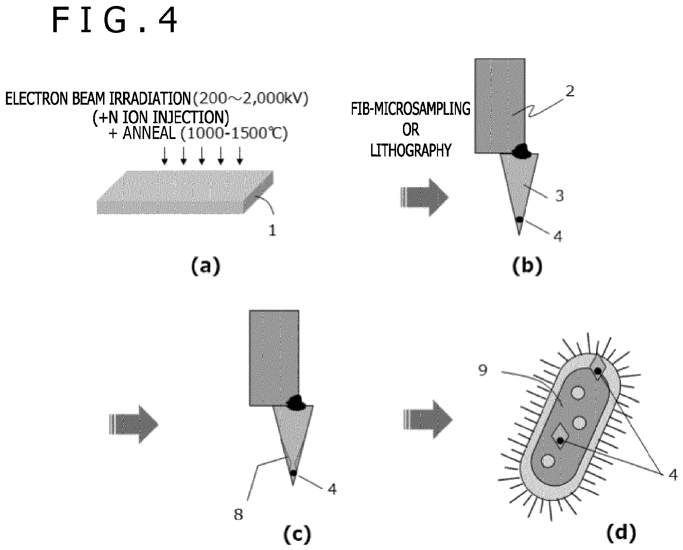

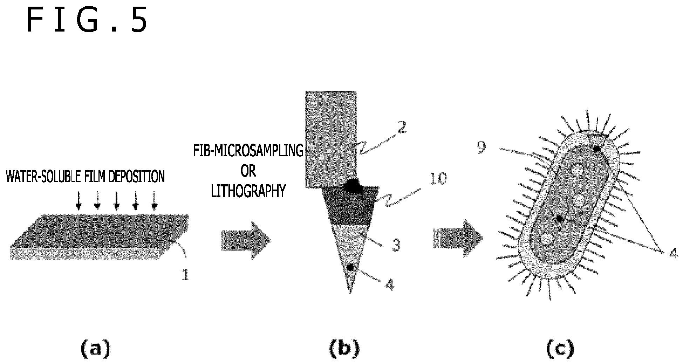

That is, the probe microscope plays a role as an apparatus that accurately injects diamond into the sample. Examples 1 and 2 based on this idea will be described with reference to FIGS. 4 and 5.

### [Example 1]

With reference to FIG. 4, Example 1 will be described.

In Example 1, an NV center portion at the tip of a diamond probe with the NV center is cut off by a mechanical force and left in a sample.

FIGS. 4(a) and 4(b) depict a configuration similar to the related art descried with reference to FIG. 3, and thus, description of FIGS. 4(a) and 4(b) is omitted. FIG. 4(c) depicts a shape obtained by further processing a diamond probe (probe) 3 fixed to a base material (support portion) 2. A focused ion beam (FIB) is used to form a processed surface 8. That is, a part of the diamond probe 3 immediately above the NV center 4 is processed and made as thin as possible.

The use of the focused ion beam (FIB) allows the width of the thin remaining part of the diamond probe 3 to be set to approximately 10 nm. When the diamond probe in this state is inserted into a cell sample 9 depicted in FIG. 4(d), only the tip portion of the diamond probe 3 including the NV center 4 can be broken and left in the cell sample 9.

As described above, the detection probe in Example 1 is a detection probe of a probe microscope that measures the temperature of the cell sample 9. The detection probe includes a probe (diamond probe 3) including at least one nitrogen-vacancy center (NV center 4) and a support portion (base material 2) that supports the probe (diamond probe 3). Furthermore, a cut-off portion is provided between the nitrogen-vacancy center (NV center 4) and the support portion (base material 2) to cut off the nitrogen-vacancy center (NV center 4) from the support portion (base material 2).

Here, the cut-off portion includes a minimum dimension portion (processed surface 8) with the minimum probe (diamond probe 3) dimension between the nitrogen-vacancy center (NV center 4) and the support portion (base material 2). The minimum dimension portion (processed surface 8) is shaped in such a manner that an area of the probe (diamond probe 3) at a predetermined distance from the tip of the probe is selectively thin. When the probe (diamond probe 3) is inserted into the cell sample 9, the probe is broken via the minimum dimension portion (processed surface 8) to cut off, from the support portion (base material 2), the tip portion of the probe (diamond probe 3) including the nitrogen-vacancy center (NV center 4).

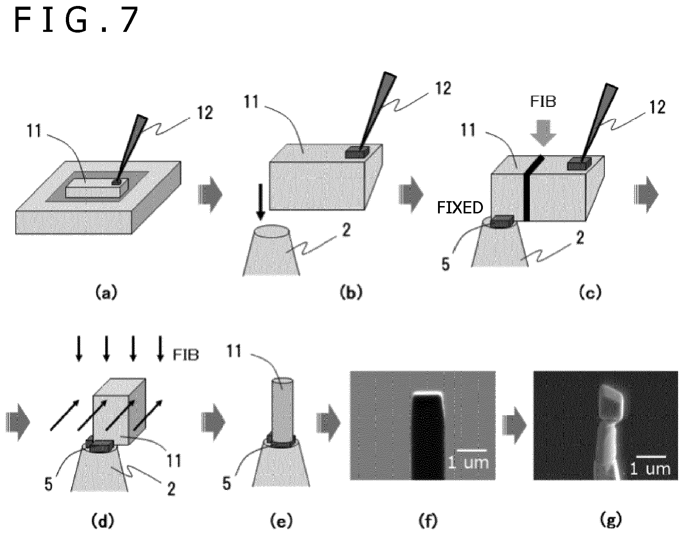

The cut-off portion includes, for example, a constricted portion (see FIG. 7(g)) between the nitrogen-vacancy center (NV center 4) and the support portion (base material 2). When the probe (diamond probe 3) is inserted into the cell sample 9, the constricted portion is broken to cut off, from the support portion (base material 2), the tip portion of the probe (diamond probe 3) including the nitrogen-vacancy center (NV center 4).

Additionally, the cut-off portion includes, for example, a recessed portion (see FIG. 7(g)) between the nitrogen-vacancy center (NV center 4) and the support portion (base material 2). When the probe (diamond probe 3) is inserted into the cell sample 9, the recessed portion is broken to cut off, from the support portion (base material 2), the tip portion of the probe (diamond probe 3) including the nitrogen-vacancy center (NV center 4).

According to Example 1, the NV center 4 is installed in the cell sample 9 and cut off from the probe microscope main body with the probe position control accuracy of the probe microscope. As a result, no thermal gradient is generated, and thus sensitive temperature measurement is enabled.

### [Example 2]

With reference to FIG. 5, Example 2 will be described.

In Example 2, an NV center portion at the tip of a diamond probe with the NV center is cut off at a water-soluble film portion and left in a sample.

First, a water-soluble film 10 is formed on the diamond substrate 1 on which ion injection, electron irradiation, and heat treatment have been completely performed, and the diamond probe 3 is cut out at the water-soluble film 10 and fixed to the base material 2.

In this case, the water-soluble film 10 at the uppermost surface is formed using a material that can be applied thinly to a thickness of several microns and can be hardened after application, for example, a water-soluble polyester resin or a water-soluble acrylic resin. This shapes the water-soluble film 10 in such a manner that the water-soluble film 10 is sandwiched between the base material 2 and the diamond probe 3. Here, the probe length from the tip of the diamond probe 3 to the water-soluble film 10 is desirably approximately several 100 nm.

When the diamond probe 3 is inserted into the cell sample 9 depicted in FIG. 5(c), the water-soluble film 10 is dissolved to allow only the tip portion of the diamond probe 3 including the NV center 4 to be left in the cell sample 9.

As described above, the detection probe in Example 2 is a detection probe of a probe microscope that measures the temperature of the cell sample 9. The detection probe includes a probe (diamond probe 3) including at least one nitrogen-vacancy center (NV center 4) and a support portion (base material 2) that supports the probe. Furthermore, a cut-off portion is provided between the nitrogen-vacancy center (NV center 4) and the support portion (base material 2) to cut off the nitrogen-vacancy center (NV center 4) from the support portion (base material 2).

The cut-off portion includes, for example, the water-soluble film 10 between the nitrogen-vacancy center (NV center 4) and the support portion (base material 2). When the probe (diamond probe 3) is inserted into the cell sample 9, the water-soluble film 10 is dissolved to cut off, from the support portion (base material 2), the tip portion of the probe (diamond probe 3) including the nitrogen-vacancy center (NV center 4).

According to Example 2, as is the case with Example 1, the NV center 4 is installed in the cell sample 9 and cut off from the probe microscope main body with the probe position control accuracy of the probe microscope. As a result, no thermal gradient is generated, and thus sensitive temperature measurement is enabled.

### [Example 3]

With reference to FIG. 7, Example 3 will be described.

In Example 3, a diamond probe is cut out from the substrate using a focused ion beam (FIB) and microsampling.

First, an area of the substrate that is subsequently formed into a diamond probe is set as a microsample 11, and the periphery of the microsample 11 is grooved using an ion beam, and a microprobe 12 is brought into contact with the microsample 11. Then, an organic tungsten gas is allowed to flow through an FIB apparatus, and the tip of the microprobe 12 is irradiated with an ion beam to solidify the organic tungsten gas to fix the probe and the sample (FIG. 7(a)).

Then, the microprobe 12 is used to extract and move the microsample 11 onto the base material 2 (FIG. 7(b)).

Subsequently, the organic tungsten gas is allowed to flow again to the contact portion between the base material 2 and the microsample 11, and the contact portion is irradiated with an ion beam to temporarily fix the base material 2 and the microsample 11 together. Subsequently, the FIB is used to remove an excess microprobe-side portion of the sample, and then the fixation between the base material 2 and the microsample 11 is enhanced for final fixation (FIG. 7(c)).

FIB processing in various directions depicted in FIG. 7(d) is executed on the roughly processed microsample 11 fixed to the base material 2 to form a diamond probe 3 with an intended shape.

FIG. 7(f) depicts an electron microphotograph of the tip portion of the diamond probe 3 actually produced from the diamond substrate. The photograph indicates that the sample was successfully processed into a cylinder with a diameter of approximately 1 µm or a square column with side length of 1 µm.

Furthermore, an FIB processing depicted in FIG. 7(d) was added to particularly execute FIB processing in a direction perpendicular to the probe axis to shape the probe in such a manner that an area at a distance of approximately 1 to 3 µm from the tip of the probe is selectively narrow. FIG. 7(g) depicts an electron microscope image of the appearance of the sample resulting from the processing. This demonstrates that the processed surface 8 described in Example 1 (see FIG. 4(c)) can be realized by FIB processing.

### [Example 4]

With reference to FIGS. 4 and 5, a sample temperature measuring method in Example 4 will be described.

In Example 4, the temperature of the cell sample 9 is measured using a probe microscope that scans the cell sample 9 using a detection probe.

First, a detection probe is formed using the probe (diamond probe 3) including at least one nitrogen-vacancy center (NV center 4) and the support portion (base material 2) that supports the probe (diamond probe 3).

Then, the tip portion of the probe (diamond probe 3) including the nitrogen-vacancy center (NV center 4) is cut off from the support portion (base material 2).

Then, the tip portion of the probe (diamond probe 3) including the nitrogen-vacancy center (NV center 4), which has been cut off, is inserted into the cell sample 9 at a predetermined point and left in the cell sample 9.

Finally, the temperature of the cell sample 9 is measured via the nitrogen-vacancy center (NV center 4) having been left.

The invention made by the inventors has been specifically described on the basis of the embodiments. However, of course, the present invention is not limited to the embodiments described above. Rather, the present invention is defined by the claims listed below.

### Reference Signs List

- 1:: Diamond substrate
- 2:: Base material
- 3:: Diamond probe
- 4:: NV center
- 5:: Adhesive
- 6:: Sample
- 7:: Liquid level
- 8:: Additional processed surface
- 9:: Cell sample
- 10:: Water-soluble layer
- 11:: Microsample
- 12:: Microprobe
- 13:: Optical bench
- 14:: Sample stage
- 15:: Sample
- 16:: Diamond probe
- 17:: Antenna for microwaves
- 18:: Transparent base material
- 19:: Green laser
- 20:: Green laser light
- 21:: AOM
- 22:: Red fluorescence
- 23:: APD detector
- 24:: Beam profiler
- 25:: Spectrometer
- 26:: Dichroic mirror
- 27:: Control system apparatus
- 28:: SPM controller
- 29:: Microwave power simplifier
- 30:: Dark room
- 31:: Scanning probe microscope

## Claims

1. A detection probe of a probe microscope (31) configured to measure a temperature of a sample (9), the detection probe comprising:
a probe (3) including at least one nitrogen-vacancy center (4); and
a support portion (2) supporting the probe (3),
**characterized in that**
the detection probe includes, between the nitrogen-vacancy center (4) and the support portion (2), at least a cut-off portion configured to cut off the nitrogen-vacancy center (4) from the support portion (2).

2. The detection probe according to claim 1, wherein
the cut-off portion includes, between the nitrogen-vacancy center (4) and the support portion (2), a minimum dimension portion in which the probe (3) has a minimum dimension,
the minimum dimension portion is shaped in such a manner that an area of the probe (3) at a predetermined distance from a tip of the probe (3) is selectively narrow, and
when the probe (3) is inserted into the sample (9), the probe is configured to be broken via the minimum dimension portion to cut off, from the support portion (2), a tip portion of the probe (3) including the nitrogen-vacancy center (4).

3. The detection probe according to claim 1, wherein
the cut-off portion includes a constricted portion between the nitrogen-vacancy center (4) and the support portion (2), and
the constricted portion is configured to be broken when the probe (3) is inserted into the sample (9), to cut off, from the support portion (2), a tip portion of the probe including the nitrogen-vacancy center (4).

4. The detection probe according to claim 1, wherein
the cut-off portion includes a recessed portion between the nitrogen-vacancy center (4) and the support portion (2), and
the recessed portion is configured to be broken when the probe (3) is inserted into the sample (9), to cut off, from the support portion (2), a tip portion of the probe including the nitrogen-vacancy center (4).

5. The detection probe according to claim 1, wherein
the cut-off portion includes a water-soluble film (10) between the nitrogen-vacancy center (4) and the support portion (2), and
the water-soluble film (10) is configured to be dissolved when the probe (3) is inserted into the sample (9), to cut off, from the support portion (2), a tip portion of the probe including the nitrogen-vacancy center (4).

6. The detection probe according to claim 5, wherein
the water-soluble film (10) is formed of a water-soluble polyester resin or a water-soluble acrylic resin.

7. A probe microscope (31) configured to measure a temperature of a sample (9) by scanning the sample using the detection probe of claim 1.

8. The probe microscope (31) according to claim 7, wherein
the cut-off portion includes, between the nitrogen-vacancy center (4) and the support portion (2), a minimum dimension portion in which the probe (3) has a minimum dimension,
the minimum dimension portion is shaped in such a manner that an area of the probe (3) at a predetermined distance from a tip of the probe is selectively narrow, and
when the probe (3) is inserted into the sample (9), the probe is configured to be broken via the minimum dimension portion to cut off, from the support portion (2), a tip portion of the probe including the nitrogen-vacancy center (4).

9. The probe microscope (31) according to claim 7, wherein
the cut-off portion includes a constricted portion between the nitrogen-vacancy center (4) and the support portion (2), and
the constricted portion is configured to be broken when the probe (3) is inserted into the sample (9), to cut off, from the support portion (2), a tip portion of the probe including the nitrogen-vacancy center (4).

10. The probe microscope (31) according to claim 7, wherein
the cut-off portion includes a recessed portion between the nitrogen-vacancy center (4) and the support portion (2), and
the recessed portion is configured to be broken when the probe (3) is inserted into the sample (9), to cut off, from the support portion (2), a tip portion of the probe including the nitrogen-vacancy center (4).

11. The probe microscope (31) according to claim 7, wherein
the cut-off portion includes a water-soluble film (10) between the nitrogen-vacancy center (4) and the support portion (2), and
the water-soluble film (10) is configured to be dissolved when the probe (3) is inserted into the sample (9), to cut off, from the support portion (2), a tip portion of the probe including the nitrogen-vacancy center (4).

12. The probe microscope (31) according to claim 11, wherein
the water-soluble film (10) is formed of a water-soluble polyester resin or a water-soluble acrylic resin.

13. A sample temperature measuring method of measuring a temperature of a sample (9) using a probe microscope (31) scanning the sample using a detection probe, the method comprising:
forming a detection probe using a probe (3) including at least one nitrogen-vacancy center (4) and a support portion (2) supporting the probe;
cutting off, from the support portion (2), a tip portion of the probe (3) including the nitrogen-vacancy center (4);
inserting the cut-off tip portion of the probe (3) including the nitrogen-vacancy center (4), into the sample (9) at a predetermined point to leave the tip portion in the sample; and
measuring the temperature of the sample (9) via the left nitrogen-vacancy center (4).

## Patentansprüche

1. Detektionssonde eines Sondenmikroskops (31), die dazu ausgelegt ist, eine Temperatur einer Probe (9) zu messen, wobei die Detektionssonde Folgendes umfasst:
eine Sonde (3), umfassend zumindest ein Stickstoff-Fehlstellen-Zentrum (4); und
einen Halteabschnitt (2), welcher die Sonde (3) hält,
**dadurch gekennzeichnet, dass**
die Detektionssonde zwischen dem Stickstoff-Fehlstellen-Zentrum (4) und dem Halteabschnitt (2) zumindest einen Abtrennabschnitt umfasst, der dazu ausgelegt ist, das Stickstoff-Fehlstellen-Zentrum (4) von dem Halteabschnitt (2) abzutrennen.

2. Detektionssonde nach Anspruch 1, wobei
der Abtrennabschnitt zwischen dem Stickstoff-Fehlstellen-Zentrum (4) und dem Halteabschnitt (2) einen Mindestabmessungsabschnitt umfasst, in dem die Sonde (3) eine Mindestabmessung aufweist,
der Mindestabmessungsabschnitt derart geformt ist, dass eine Fläche der Sonde (3) in einer vorbestimmten Entfernung von einer Spitze der Sonde (3) selektiv schmal ist, und,
wenn die Sonde (3) in die Probe (9) eingebracht wird, die Sonde dazu ausgelegt ist, über den Mindestabmessungsabschnitt gebrochen zu werden, um einen Spitzenabschnitt der Sonde (3), einschließlich des Stickstoff-Fehlstellen-Zentrums (4), von dem Halteabschnitt (2) abzutrennen.

3. Detektionssonde nach Anspruch 1, wobei
der Abtrennabschnitt einen eingeengten Abschnitt zwischen dem Stickstoff-Fehlstellen-Zentrum (4) und dem Halteabschnitt (2) umfasst und
der eingeengte Abschnitt dazu ausgelegt ist, gebrochen zu werden, wenn die Sonde (3) in die Probe (9) eingebracht wird, um einen Spitzenabschnitt der Sonde, einschließlich des Stickstoff-Fehlstellen-Zentrums (4), von dem Halteabschnitt (2) abzutrennen.

4. Detektionssonde nach Anspruch 1, wobei
der Abtrennabschnitt einen ausgesparten Abschnitt zwischen dem Stickstoff-Fehlstellen-Zentrum (4) und dem Halteabschnitt (2) umfasst und
der ausgesparte Abschnitt dazu ausgelegt ist, gebrochen zu werden, wenn die Sonde (3) in die Probe (9) eingebracht wird, um einen Spitzenabschnitt der Sonde, einschließlich des Stickstoff-Fehlstellen-Zentrums (4), von dem Halteabschnitt (2) abzutrennen.

5. Detektionssonde nach Anspruch 1, wobei
der Abtrennabschnitt einen wasserlöslichen Film (10) zwischen dem Stickstoff-Fehlstellen-Zentrum (4) und dem Halteabschnitt (2) umfasst und
der wasserlösliche Film (10) dazu ausgelegt ist, aufgelöst zu werden, wenn die Sonde (3) in die Probe (9) eingebracht wird, um einen Spitzenabschnitt der Sonde, einschließlich des Stickstoff-Fehlstellen-Zentrums (4), von dem Halteabschnitt (2) abzutrennen.

6. Detektionssonde nach Anspruch 5, wobei
der wasserlösliche Film (10) aus einem wasserlöslichen Polyesterharz oder einem wasserlöslichen Acrylharz ausgebildet ist.

7. Sondenmikroskop (31), das dazu ausgelegt ist, eine Temperatur der Probe (9) durch Abtasten der Probe unter Verwendung der Detektionssonde nach Anspruch 1 zu messen.

8. Sondenmikroskop (31) nach Anspruch 7, wobei
der Abtrennabschnitt zwischen dem Stickstoff-Fehlstellen-Zentrum (4) und dem Halteabschnitt (2) einen Mindestabmessungsabschnitt umfasst, in dem die Sonde (3) eine Mindestabmessung aufweist,
der Mindestabmessungsabschnitt derart geformt ist, dass eine Fläche der Sonde (3) in einer vorbestimmten Entfernung von einer Spitze der Sonde selektiv schmal ist, und,
wenn die Sonde (3) in die Probe (9) eingebracht wird, die Sonde dazu ausgelegt ist, über den Mindestabmessungsabschnitt gebrochen zu werden, um einen Spitzenabschnitt der Sonde, einschließlich des Stickstoff-Fehlstellen-Zentrums (4), von dem Halteabschnitt (2) abzutrennen.

9. Sondenmikroskop (31) nach Anspruch 7, wobei
der Abtrennabschnitt einen eingeengten Abschnitt zwischen dem Stickstoff-Fehlstellen-Zentrum (4) und dem Halteabschnitt (2) umfasst und
der eingeengte Abschnitt dazu ausgelegt ist, gebrochen zu werden, wenn die Sonde (3) in die Probe (9) eingebracht wird, um einen Spitzenabschnitt der Sonde, einschließlich des Stickstoff-Fehlstellen-Zentrums (4), von dem Halteabschnitt (2) abzutrennen.

10. Sondenmikroskop (31) nach Anspruch 7, wobei
der Abtrennabschnitt einen ausgesparten Abschnitt zwischen dem Stickstoff-Fehlstellen-Zentrum (4) und dem Halteabschnitt (2) umfasst und
der ausgesparte Abschnitt dazu ausgelegt ist, gebrochen zu werden, wenn die Sonde (3) in die Probe (9) eingebracht wird, um einen Spitzenabschnitt der Sonde, einschließlich des Stickstoff-Fehlstellen-Zentrums (4), von dem Halteabschnitt (2) abzutrennen.

11. Sondenmikroskop (31) nach Anspruch 7, wobei
der Abtrennabschnitt einen wasserlöslichen Film (10) zwischen dem Stickstoff-Fehlstellen-Zentrum (4) und dem Halteabschnitt (2) umfasst und
der wasserlösliche Film (10) dazu ausgelegt ist, aufgelöst zu werden, wenn die Sonde (3) in die Probe (9) eingebracht wird, um einen Spitzenabschnitt der Sonde, einschließlich des Stickstoff-Fehlstellen-Zentrums (4), von dem Halteabschnitt (2) abzutrennen.

12. Sondenmikroskop (31) nach Anspruch 11, wobei
der wasserlösliche Film (10) aus einem wasserlöslichen Polyesterharz oder einem wasserlöslichen Acrylharz ausgebildet ist.

13. Probentemperaturmessverfahren zum Messen einer Temperatur einer Probe (9) unter Verwendung eines Sondenmikroskops (31), welches die Probe unter Verwendung einer Detektionssonde abtastet, wobei das Verfahren Folgendes umfasst:
Ausbilden einer Detektionssonde unter Verwendung einer Sonde (3), umfassend zumindest ein Stickstoff-Fehlstellen-Zentrum (4) und einen Halteabschnitt (2), welcher die Sonde hält;
Abtrennen eines Spitzenabschnitts der Sonde (3), einschließlich des Stickstoff-Fehlstellen-Zentrums (4), von dem Halteabschnitt (2);
Einbringen des abgetrennten Spitzenabschnitts der Sonde (3), einschließlich des Stickstoff-Fehlstellen-Zentrums (4), in die Probe (9) an einem vorbestimmten Punkt, um den Spitzenabschnitt in der Probe zu belassen; und
Messen der Temperatur der Probe (9) über das belassene Stickstoff-Fehlstellen-Zentrum (4).

## Revendications

1. Sonde de détection d'un microscope-sonde (31) configuré pour mesurer une température d'un échantillon (9), la sonde de détection comprenant :
une sonde (3) incluant au moins un centre de vacance d'azote (4) ; et
une partie de support (2) supportant la sonde (3), **caractérisée en ce que**
la sonde de détection inclut, entre le centre de vacance d'azote (4) et la partie de support (2), au moins une partie d'isolation configurée pour isoler le centre de vacance d'azote (4) de la partie de support (2).

2. Sonde de détection selon la revendication 1, dans lequel
la partie d'isolation inclut, entre le centre de vacance d'azote (4) et la partie de support (2), une partie de dimension minimale dans laquelle la sonde (3) présente une dimension minimale,
la partie de dimension minimale est formée de telle sorte qu'une zone de la sonde (3) à une distance prédéterminée d'une pointe de la sonde (3) soit sélectivement étroite, et
lorsque la sonde (3) est insérée dans l'échantillon (9), la sonde est configurée pour être rompue via la partie de dimension minimale afin d'isoler, à partir de la partie de support (2), une partie de pointe de la sonde (3) incluant le centre de vacance d'azote (4).

3. Sonde de détection selon la revendication 1, dans lequel
la partie d'isolation inclut une partie rétrécie entre le centre de vacance d'azote (4) et la partie de support (2), et
la partie rétrécie est configurée pour être rompue lorsque la sonde (3) est insérée dans l'échantillon (9), afin d'isoler, de la partie de support (2), une partie de pointe de la sonde incluant le centre de vacance d'azote (4).

4. Sonde de détection selon la revendication 1, dans lequel
la partie d'isolation inclut une partie en retrait entre le centre de vacance d'azote (4) et la partie de support (2), et
la partie en retrait est configurée pour être rompue lorsque la sonde (3) est insérée dans l'échantillon (9), afin d'isoler, de la partie de support (2), une partie de pointe de la sonde incluant le centre de vacance d'azote (4).

5. Sonde de détection selon la revendication 1, dans lequel
la partie d'isolation inclut un film hydrosoluble (10) entre le centre de vacance d'azote (4) et la partie de support (2), et
le film hydrosoluble (10) est configuré pour être dissous lorsque la sonde (3) est insérée dans l'échantillon (9), afin d'isoler, de la partie de support (2), une partie de pointe de la sonde incluant le centre de vacance d'azote (4).

6. Sonde de détection selon la revendication 5, dans lequel
le film hydrosoluble (10) est formé d'une résine polyester hydrosoluble ou d'une résine acrylique hydrosoluble.

7. Microscope-sonde (31) configuré pour mesurer une température d'un échantillon (9) en balayant l'échantillon en utilisant la sonde de détection de la revendication 1.

8. Microscope-sonde (31) selon la revendication 7, dans lequel
la partie d'isolation inclut, entre le centre de vacance d'azote (4) et la partie de support (2), une partie de dimension minimale dans laquelle la sonde (3) présente une dimension minimale,
la partie de dimension minimale est mise en forme de telle sorte qu'une zone de la sonde (3) à une distance prédéterminée d'une pointe de la sonde soit sélectivement étroite, et
lorsque la sonde (3) est insérée dans l'échantillon (9), la sonde est configurée pour être rompue via la partie de dimension minimale pour isoler, de la partie de support (2), une partie de pointe de la sonde incluant le centre de vacance d'azote (4).

9. Microscope-sonde (31) selon la revendication 7, dans lequel
la partie d'isolation inclut une partie rétrécie entre le centre de vacance d'azote (4) et la partie de support (2), et
la partie rétrécie est configurée pour être rompue lorsque la sonde (3) est insérée dans l'échantillon (9), afin d'isoler, de la partie de support (2), une partie de pointe de la sonde incluant le centre de vacance d'azote (4).

10. Microscope-sonde (31) selon la revendication 7, dans lequel
la partie d'isolation inclut une partie en retrait entre le centre de vacance d'azote (4) et la partie de support (2), et
la partie en retrait est configurée pour être rompue lorsque la sonde (3) est insérée dans l'échantillon (9), afin d'isoler, de la partie de support (2), une partie de pointe de la sonde incluant le centre de vacance d'azote (4).

11. Microscope-sonde (31) selon la revendication 7, dans lequel
la partie d'isolation inclut un film hydrosoluble (10) entre le centre de vacance d'azote (4) et la partie de support (2), et
le film hydrosoluble (10) est configuré pour être dissous lorsque la sonde (3) est insérée dans l'échantillon (9), afin d'isoler, de la partie de support (2), une partie de pointe de la sonde incluant le centre de vacance d'azote (4).

12. Microscope-sonde (31) selon la revendication 11, dans lequel
le film hydrosoluble (10) est formé d'une résine polyester hydrosoluble ou d'une résine acrylique hydrosoluble.

13. Procédé de mesure de température d'échantillon consistant à mesurer une température d'un échantillon (9) en utilisant un microscope-sonde (31) balayant l'échantillon en utilisant une sonde de détection, le procédé comprenant les étapes consistant à :
former une sonde de détection à l'aide d'une sonde (3) incluant au moins un centre de vacance d'azote (4) et une partie de support (2) supportant la sonde ;
isoler, de la partie de support (2), une partie de pointe de la sonde (3) comprenant le centre de vacance d'azote (4) ;
insérer la partie de pointe isolée de la sonde (3) incluant le centre de vacance d'azote (4), dans l'échantillon (9) en un point prédéterminé pour laisser la partie de pointe dans l'échantillon ; et
mesurer la température de l'échantillon (9) via le centre de vacance d'azote gauche (4).
